# EUROPÄISCHE PATENTSCHRIFT

(11) **EP 1 141 559 B1**
(45) Veröffentlichungstag und Bekanntmachung des Hinweises auf die Patenterteilung: **18.12.2002**
(21) Anmeldenummer: 99957994.9
(22) Anmeldetag: 04.11.1999
(51) Int. Cl.: F16B 13/14

(54) **SPREIZDÜBEL**
STRADDLING DOWEL
CROCHET A EXPANSION

(30) Priorität: 21.12.1998 DE 19859220
(43) Veröffentlichungstag der Anmeldung: 10.10.2001
(73) Patentinhaber: fischerwerke Artur Fischer GmbH & Co. KG, 72178 Waldachtal (DE)
(72) Erfinder: DALY, Aaron, D-72178 Waldachtal (DE); GRAF, Roland, D-72160 Horb (DE)
(86) Internationale Anmeldenummer: EP9908444
(87) Internationale Veröffentlichungsnummer: WO00037809

(56) Entgegenhaltungen:
- DE-A- 3 017 108
- DE-A- 3 416 797
- US-A- 2 240 716

## Beschreibung

Die Erfindung betrifft einen Spreizdübel aus Kunststoff mit den Merkmalen des Oberbegriffs des Anspruchs 1.

Ein derartiger Spreizdübel ist aus der DE 43 17 039 A1 bekannt. Der bekannte Spreizdübel weist in einem sich über einen Teil der Länge des Spreizdübels erstreckenden Spreizbereich scheibenförmige Spreizelemente auf, die senkrecht zur Längsrichtung des Spreizdübels angeordnet sind. Die Spreizelemente sind mit einem sie in Längsrichtung des Spreizdübels durchsetzenden Spreizloch versehen, das exzentrisch in den scheibenförmigen Spreizelementen angebracht ist. Dabei sind die Spreizlöcher einander benachbarter Spreizelemente in einander entgegengesetzte Richtungen versetzt in den Spreizelementen angeordnet. Die Spreizlöcher in den Spreizelementen bilden im Spreizbereich des Spreizdübels einen Spreizkanal, der durch die abwechselnd in entgegengesetzter Richtung exzentrisch angeordneten Spreizlöcher verengt ist. Zum Aufspreizen des bekannten Spreizdübels wird ein stiftförmiges Spreizelement, beispielsweise ein Spreiznagel oder eine Spreizschraube, in den Spreizkanal des Spreizdübels eingebracht. Das stiftförmige Spreizelement richtet die Spreizlöcher in den Spreizelementen gleichachsig zueinander aus, wodurch die scheibenförmigen Spreizelemente in radialer Richtung des Spreizdübels verschoben werden. Dabei werden einander benachbarte Spreizelemente in entgegengesetzten Richtungen verschoben. Auf diese Weise wird der Spreizdübel aufgespreizt und in einem Bohrloch verankert.

Zur Befestigung der Spreizelemente weist der bekannte Spreizdübel in seinem Spreizbereich zwei in Längsrichtung verlaufende Befestigungsstege auf, die einander gegenüberliegend am Umfang des Spreizdübels angeordnet sind. Die scheibenförmigen Spreizelemente sind jeweils mit einem Befestigungssteg verbunden, von dem sie rechtwinklig in Richtung des anderen Befestigungsstegs abstehen. Dabei ist jedes zweite Spreizelement mit einem und das dazwischenliegende Spreizelement mit dem anderen Befestigungssteg verbunden, so daß die scheibenförmigen Spreizelemente kammartig ineinandergreifen. Die Befestigungsstege sind in einem rechten Winkel zu der Richtung angeordnet, in welche die Spreizlöcher exzentrisch in den Spreizelementen angeordnet sind. Beim Aufspreizen des Spreizdübels werden die Befestigungsstege parallel zueinander in entgegengesetzte Richtungen verschoben und nicht radial auseinandergespreizt. Beim Aufspreizen des Spreizdübels werden also die Spreizelemente unmittelbar mit ihrem Umfangsrand gegen eine Bohrlochwand gedrückt und nicht die Befestigungsstege.

Bekannt ist darüber hinaus aus DE 30 17 108 ein Dübel mit mehreren schraubenbetätigbaren Spreizelemente, die in Aussparungen des Dübels gelagert sind und die bei der Montage aus dem Dübel austreten. Der Dübel besteht aus einer zylindrischen Hülse mit länglichen Schlitzen in der Wandung. Die Schlitze sind gegenüber der Längsrichtung des Dübels angestellt und dienen der Lagerung der scheibenförmigen Spreizelemente. Diese sind beim Einbringen des Dübels in das Bohrloch soweit in das Innere des Dübels eingeschoben, dass sie nicht nach außen vorspringen. Ihre innenliegenden Kanten verengen den Kanal für die einzubringende Schraube und bilden für diese durch ihre Schrägstellung das Gegengewinde. Durch das Eindrehen der Schraube werden die Spreizelemente radial von dem Gewindegrund der Schraube nach außen gedrückt und treten aus der Dübelhülse aus. Dadurch kommt es lediglich an den Spreizelementen selbst zu einer Verspannung mit der Bohrlochinnenwand. Dies hat den Nachteil, das die Spreiz- und Ankerkräfte nicht flächenmäßig sondern punktuell auf die Bohrlochinnenwand wirken, was in porösen Baustoffen und Hohlbaustoffen zu verringerten Haltewerten führt. Ferner fehlt eine gegenseitige Abstützung der Spreizelemente, so dass diese auf Biegung beansprucht werden.

Rippenartige Ausformungen an der Innenwand eines Dübels sind darüber hinaus z. B. aus US-A-2 240 716 bekannt. Der bekannte Dübel weist einen vom Einführende ausgehenden Längsschlitz, und damit zwei Spreizschenkel auf. Im Inneren des Dübels ist eine sich verjüngende Bohrung ausgeformt. Durch das Eindrehen einer Schraube spreizen sich die beiden Spreizschenkel V-förmig auf und werden gegen die Bohrungsinnenwand gepresst. Die Anpresskraft ist entlang des Dübels ungleichmäßig verteilt, mit dem Maximum im Bereich des vorderen Dübelendes. Im Gegensatz zu Kunststoffdübeln, bei denen sich das Gewinde der Schraube üblicherweise selbst ein Gegengewinde im Dübel furcht, sieht US-A-2 240 716 einen Dübel aus Metall vor, bei dem bereits ein Gewinde im Dübel eingebracht sein muss, da sonst ein Eindrehen einer Schraube kaum möglich wäre. Dementsprechend handelt es sich bei den zur Schraube gewandten Lamellen der US-A-2 240 716 nicht um Spreizelemente, sondern um die Ausformung eines Gewindes. Die Lamellen stehen folglich nicht rechtwinklig zur Längsrichtung des Dübels. Die Aufspreizung erfolgt durch den Kontakt der Gewindeflanken der Schraube auf den Gewindegrund der Spreizschenkel und nicht etwa über die Gewinderippen der Spreizschenkel.

Der Erfindung liegt die Aufgabe zugrunde, einen Spreizdübel der eingangs genannten Art mit erhöhter Verankerungskraft (Auszugskraft) in einem Bohrloch in einem Mauerwerk vorzuschlagen.

Diese Aufgabe wird erfindungsgemäß durch die Merkmale des Anspruchs 1 gelöst. Der erfindungsgemäße Spreizdübel weist Spreizrippen als Spreizelemente auf, die in etwa in Radialebenen des Spreizdübels angeordnet sind und die den Spreizkanal auf einem Teil des Umfangs des Spreizdübels umschließen. Dabei sind einander in Längsrichtung des Spreizdübels benachbarte Spreizrippen an verschiedenen Umfangsstellen beispielsweise einander gegenüber angeordnet. Innenränder der Spreizrippen begrenzen den Spreizkanal an dessen Umfang und verengen den Spreizkanal. Durch Einbringen eines stiftförmigen Spreizelements werden die Spreizrippen radial in unterschiedlichen Richtungen auseinandergedrückt und der Spreizdübel auf diese Weise aufgespreizt. Mit Verengen im Sinne der Erfindung ist gemeint, daß der von den Innenrändern der Spreizrippen am Umfang begrenzte Spreizkanal eine kleinere lichte Weite aufweist als ein Quer- bzw. Durchmesser des stiftförmigen Spreizelements, das zum Aufspreizen des Spreizdübels verwendet wird.

Befestigt sind die Spreizrippen an Umfangswandabschnitten, von denen sich jeder nur über einen Teil des Umfangs des Spreizdübels erstreckt und die zusammen bei nicht aufgespreiztem Spreizdübel den Spreizdübel in Umfangsrichtung zumindest näherungsweise vollständig schließen. Die Spreizrippen stehen von Innenseiten der Umfangswandabschnitte nach innen ab, wobei benachbarte Spreizrippen an verschiedenen Umfangswandabschnitten angebracht sind. Die Spreizrippen greifen, soweit sie sich in Längsrichtung des Spreizdübels betrachtet überdecken, kammartig ineinander.

Zum Aufspreizen des erfindungsgemäßen Spreizdübels wird ein stiftförmiges Spreizelement in den Spreizkanal des Spreizdübels eingebracht. Dieses Spreizelement drückt die Spreizrippen radial in unterschiedlichen Richtungen auseinander, wodurch die Umfangswandabschnitte, von denen die Spreizrippen nach innen abstehen, ebenfalls auseinandergedrückt, d. h. aufgespreizt werden. Durch das Einbringen des Spreizelements in den Spreizkanal werden die Umfangswandabschnitte in radialen Richtungen auseinandergedrückt. In einem Bohrloch werden die Umfangswandabschnitte gegen eine Bohrlochwand gedrückt und der Spreizdübel auf diese Weise im Bohrloch verspannt und verankert. Da die auseinandergespreizten Umfangswandabschnitte nahezu über den gesamten Umfang und über die gesamte Länge an der Bohrlochwand anliegen, ist eine großflächige, nahezu vollflächige Anlage an der Bohrlochwand gegeben, die eine hohe Halte- und Verankerungskraft bewirkt. In porösen Baustoffen wie Gasbeton oder in Hohlbaustoffen wie Hohlblocksteinen führt die großflächige Anlage an der Bohrlochwand zu einer niedrigen Flächenbelastung und damit ebenfalls zu einer hohen Halte- und Verankerungskraft.

Weiterer Vorteil des erfindungsgemäßen Spreizdübels ist, daß dessen Spreizrippen nur auf einem Teil des Umfangs am stiftförmigen Spreizelement anliegen und das stiftförmige Spreizelement nicht vollständig umschließen. Dies führt zu einem verringerten Eintreibwiderstand, bei einer Spreizschraube als Spreizelement zu einem verringerten Eindrehmoment bei gleicher Aufspreizung des Spreizdübels.

Vorzugsweise ist der erfindungsgemäße Spreizdübel im Spreizbereich in zwei Umfangswandabschnitte geteilt, von denen die Spreizrippen nach innen abstehen. Die Umfangswandabschnitte und die Spreizrippen umfassen das zwischen sie einbringbare Spreizelement auf einem Umschlingungswinkel von ungefähr 180°. Es ist allerdings auch möglich, den Spreizdübel im Spreizbereich mit mehr als zwei Umfangswandabschnitten auszubilden. Zur Führung des stiftförmigen Spreizelements weist der Spreizdübel in einer Ausgestaltung der Erfindung eine rundum geschlossene Schafthülse auf, die das stiftförmige Spreizelement in axialer Richtung führt. Zur Vormontage kann das stiftförmige Spreizelement ein Stück weit in die Schafthülse eingebracht und dort durch Form- und/oder Kraftschluß gehalten sein. Das vormontierte Spreizelement ragt nicht in den Spreizbereich hinein, so daß der Spreizdübel nicht aufgespreizt wird.

Durch das bereits vormontierte Spreizelemente ist die Handhabung des Spreizdübels vereinfacht.

Zur Herstellbarkeit des erfindungsgemäßen Spreizdübels als Spritzgießteil aus Kunststoff sieht eine Ausgestaltung der Erfindung vor, die Umfangswandabschnitte über ein Filmscharnier schwenkbar miteinander zu verbinden. Das Filmscharnier ist eine dünne Kunststoffhaut, die die Umfangswandabschnitte miteinander verbindet und die durch ihre dünne Ausbildung und die Flexibilität des Kunststoffs als Scharnier wirkt und ein Verschwenken der Umfangswandabschnitte zuläßt. Die Umfangswandabschnitte können in einer Linie hintereinander oder seitlich nebeneinander angeordnet spritzgegossen und nach dem Entformen zusammengeschwenkt werden, so daß ihre Spreizrippen kammartig ineinandergreifen. Vorzugsweise ist ein Umfangswandabschnitt unmittelbar einstückig mit der Schafthülse verbunden und der andere Umfangswandabschnitt über das Filmscharnier und den einen Umfangswandabschnitt mittelbar mit der Schafthülse verbunden. Nach dem Zusammenschwenken kann der andere Umfangswandabschnitt mit der Schafthülse beispielsweise durch Ultraschallschweißen verbunden werden.

Eine andere Ausgestaltung der Erfindung sieht vor, daß die Umfangswandabschnitte, an deren Innenseiten die Spreizrippen angebracht sind in einem Grund- oder Ursprungszustand des Spreizdübels nach dem Spritzgießen, in einem solchen Abstand voneinander angeordnet sind, daß die Spreizrippen nicht oder nur wenig ineinander greifen. Es besteht also ein zwischen den Umfangswandabschnitten quer durch den Spreizdübel hindurch gehender, ununterbrochener Zwischenraum zwischen den Spreizrippen, der ein Öffnen eines Spritzgießwerkzeugs und ein Entformen des erfindungsgemäßen Spreizdübels nach dem Spritzgießen ermöglicht. Die Umfangswandabschnitte können parallel zueinander angeordnet sein. Nach dem Entformen lassen sich die Umfangswandabschnitte soweit zusammendrücken, daß die Spreizrippen kammartig ineinander greifen und der Spreizdübel in ein Bohrloch eingebracht werden kann. Diese Ausgestaltung der Erfindung ermöglicht ein einstückiges Spritzgießen des Spreizdübels in einem Arbeitsgang. Die Umfangswandabschnitte brauchen nach dem Spritzgießen lediglich zusammengedrückt werden, was unter Umständen durch das Einbringen des Spreizdübels in das Bohrloch erfolgen kann. Ein Zusammenschwenken der Umfangswandabschnitte erübrigt sich. Weiterer Vorteil dieser Ausgestaltung der Erfindung ist, daß die Umfangswandabschnitte an ihren Enden nicht miteinander oder mit einer Schafthülse oder dgl. beispielsweise durch Ultraschallschweißen verbunden werden müssen.

Um die Umfangswandabschnitte zusammendrückbar, d.h. beweglich miteinander zu verbinden, weist eine Ausgestaltung der Erfindung bewegliche Verbindungselemente an einem Ende der Umfangswandabschnitte auf, über die die Umfangswandabschnitte mit einer Schafthülse des Spreizdübels einstückig verbunden sind. Die Verbindungselemente können Stege oder dgl. sein, die aufgrund Ihrer Elastizität die erforderliche Beweglichkeit aufweisen.

Bei einer Ausgestaltung der Erfindung weisen die Umfangswandabschnitte Schnappoder Rastelemente auf, mit denen die Umfangswandabschnitte in zusammengedrücktem Zustand miteinander verbindbar sind. Die Schnapp- oder Rastelemente sind vorzugsweise an einem der Schafthülse abgewandten, vorderen - oder Einführende des Spreizdübels angeordnet. Bei dieser Ausgestaltung der Erfindung werden nach dem Entformen des Spreizdübels aus einem Spritzgießwerkzeug die Umfangswandabschnitte am vorderen Ende des Spreizdübels zusammengedrückt, so daß sie dort miteinander verasten. Nach hinten in Richtung der Schafthülse stehen die Umfangswandabschnitte schräg auseinander. Mit den an ihrem vorderen Ende durch die Schnapp- oder Rastelemente zusammengehaltene Umfangswandabschnitten läßt sich der Spreizdübel in ein Bohrloch einbringen, wobei die Umfangswandabschnitte vom Bohrloch auf ihrer gesamten Länge zusammengedrückt werden, so daß die Spreizrippen kammartig ineinander greifen. Diese Ausgestaltung der Erfindung hat den Vorteil, daß nach dem Entformen des Spreizdübels und vor dem Einbringen in ein Bohrloch lediglich die Umfangswandabschnitte am vorderen Ende des Spreizdübels zusammengedrückt werden, bis die Schnapp- oder Rastelemente einrasten, der Spreizdübel ist dann gebrauchsfertig.

Bei einer Ausgestaltung der Erfindung sind die Umfangswandabschnitte über ein Filmscharnier miteinander verbunden.

Die Erfindung wird nachfolgend anhand eines in der Zeichnung dargestellten Ausführungsbeispiels näher erläutert. Es zeigen:
- Figur 1: eine perspektivische Darstellung eines erfindungsgemäßen Spreizdübels;
- Figur 2: eine perspektivische Darstellung des Spreizdübels aus Figur 1 in einem aufgeklappten Zustand;
- Figur 3: eine vergrößerte Darstellung eines Spreizbereichs des Spreizdübels aus Figur 1 in aufgeklapptem Zustand;
- Figur 4: eine Darstellung entsprechend Figur 3 in um 90° gedrehter Blickrichtung;
- Figur 5: einen Querschnitt durch einen Spreizbereich des Spreizdübels aus Figur 1;
- Figur 6: eine perspektivische Darstellung einer zweiten Ausführungsform eines erfindungsgemäßen Spreizdübels in entformtem Zustand;
- Figur 7: den Spreizdübel aus Figur 6 in einem verastetem Zustand;
- Figur 8: einen Querschnitt durch einen Spreizbereich des Spreizdübels aus Figur 6; und
- Figur 9: einen Querschnitt durch ein vorderes Ende des Spreizdübels aus Figur 6.

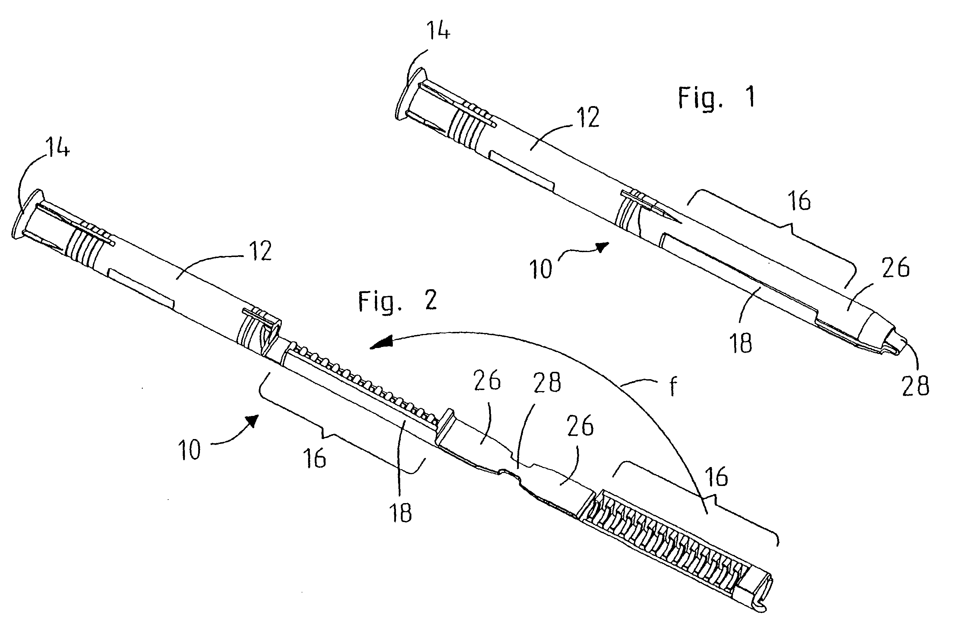

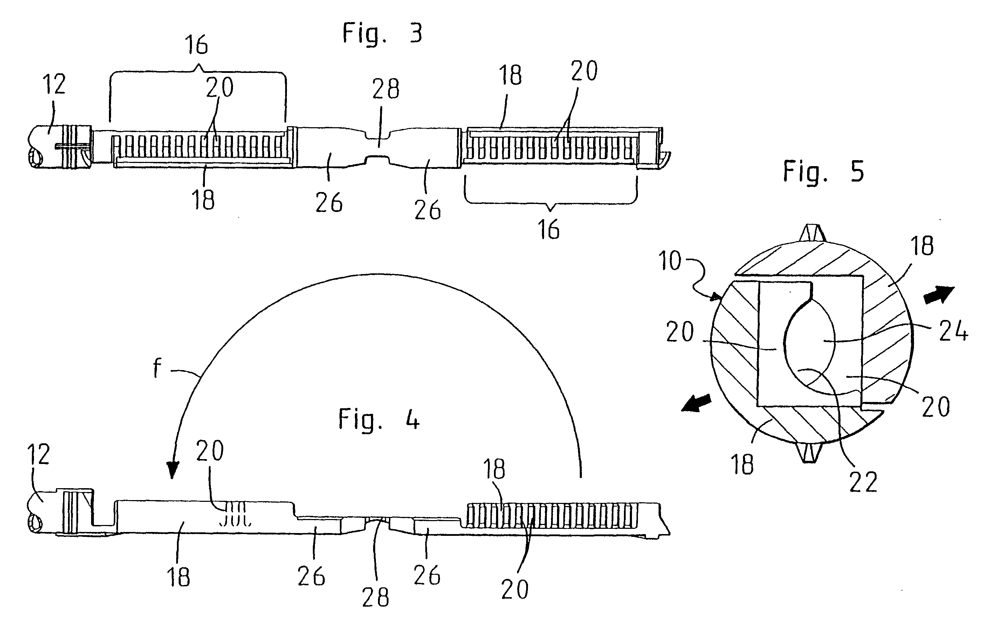

Der in Figur 1 dargestellte Spreizdübel 10 ist einstückig als Spritzgießteil aus Kunststoff hergestellt. Er weist eine Schafthülse 12 mit einem trichterförmigen Bund 14 zur Aufnahme des Kopfes einer nicht dargestellten Senkkopfschraube an einem Ende der Schafthülse 12 auf. An das andere Ende der Schafthütse 12 schließt sich ein Spreizbereich 16 an, in welchem der Spreizdübel 10 zwei in Längsrichtung verlaufende Umfangswandabschnitte 18 aufweist. Beide Umfangswandabschnitte 18 erstrecken sich über einen Umfangswinkel von etwa 180° und sind einander gegenüber angeordnet, so daß sie sich gemeinsam auf einen Umfangswinkel von 360° ergänzen, wie gut in Figur 5 erkennbar ist.

In Figuren 2 bis 4 ist der Spreizdübel 10 in aufgeklapptem Zustand dargestellt. An ihren Innenseiten weisen die Umfangswandabschnitte 18 Spreizrippen 20 auf, die sich ebenso wie die Umfangswandabschnitte über einen Kreisbogen von ungefähr 180° erstrecken (Figur 5). Die Spreizrippen 20 stehen rechtwinklig von den Umfangswandabschnitten 18 ab, sie befinden sich in Radialebenen des Spreizdübels 10. Die Spreizrippen 20 eines Umfangswandabschnitts 18 sind in einem Abstand voneinander angeordnet, der näherungsweise ihrer Dicke entspricht oder etwas größer ist. Durch Zusammenklappen der beiden Umfangswandabschnitte 18 gelangen die Spreizrippen 20 kammartig ineinandergreifend zwischeneinander, so daß sich jeweils eine Spreizrippe 20, die einstückig mit einem der beiden Umfangswandabschnitte 18 ist, zwischen zwei Spreizrippen 20 befinden, die'einstückig mit dem anderen Umfangswandabschnitt 18 sind . Die Spreizrippen 20 weisen einen halbkreisbogenförmigen Innenrand 22 auf, dessen gedachter Mittelpunkt exzentrisch zum Spreizdübel 10 in Richtung desjenigen Umfangswandabschnitts 18 versetzt angeordnet ist, mit dem die jeweilige Spreizrippe 20 nicht verbunden ist. Die Spreizrippen 20 begrenzen mit ihren Innenrändern 22 dadurch einen in Längsrichtung des Spreizdübels 10 verlaufenden Spreizkanal 24, der linsenförmig verengt ist, wie in Figur 5 gut zu sehen.

An einem vorderen Ende gehen die Umfangswandabschnitte 18 in Spreizzungen 26 über, die näherungsweise einen halbkreisförmigen Querschnitt aufweisen und in denen kein Spreizkanal ausgebildet ist. An ihren vorderen Enden sind die beiden Spreizzungen 26 über ein Filmscharnier 28 schwenkbar miteinander verbunden. Das Filmscharnier 28 ist eine dünne Kunststoffhaut, die als Scharnier wirkt und ein Verschwenken der beiden Spreizzungen 26 und der Umfangswandabschnitte 18 mit den Spreizrippen 20 zuläßt. Durch diese Schwenkbarkeit ist es möglich, die beiden Umfangswandabschnitte 18 wie mit Pfeil f in Figuren 2 und 4 angedeutet, zusammenzuklappen, so daß die Spreizrippen 20 der beiden Umfangswandabschnitte 18 kammartig ineinandergreifen und der in Figur 5 sichtbare Spreizkanal 24 entsteht.

Um den Spreizdübel 10 einstückig durch Spritzgießen aus Kunststoff herstellen zu können, wird der Spreizdübel 10 in dem in Figuren 2 bis 4 dargestellten, gestreckten Zustand hergestellt. Nach dem Spritzgießen und Entformen werden die beiden Umfangswandabschnitte 18 um das Filmscharnier 28 herum zusammengeklappt, so daß die Spreizrippen 20 kammartig ineinandergreifen und den linsenförmig verengten Spreizkanal 24 zwischen ihren Innenrändern 22 bilden. Der zusammengeklappte Zustand ist in Figuren 1 und 5 dargestellt. Zum Aufspreizen wird eine nicht dargestellte Spreizschraube, die vorzugsweise bereits in die Schafthülse 12 einschraubt ist, durch die Schafthülse 12 in den Spreizkanal 24 zwischen den Spreizrippen 20 eingeschraubt. Die Spreizschraube drückt die Spreizrippen 20 und damit die Umfangswandabschnitte 18 auseinander. Auf diese Weise wird der Spreizdübel 10 in seinem Spreizbereich in Richtung der beiden Pfeile in Figur 5 aufgespreizt und läßt sich dadurch in einem Bohrloch verankern. Da die beiden Umfangswandabschnitte 18 zusammen nahezu den gesamten Umfang des Spreizdübels 10 einnehmen, liegt der aufgespreizte Spreizdübel 10 nahezu vollflächig an einer Bohrlochwand eines nicht dargestellten Bohrlochs an. Dadurch wird eine hohe Verankerungs- und Auszugskraft erzielt.

Einer der beiden Umfangswandabschnitte 18 ist unmittelbar einstückig an der Schafthülse 12 angesetzt. Nach dem Zusammenklappen der beiden Umfangswandabschnitte 18 wird der nicht unmittelbar mit der Schafthülse 12 verbundene Umfangswandabschnitt 18 durch eine Ultraschallverschweißung mit der Schafthülse 12 verschweißt. Beim Eindrehen gelangt die Spreizschraube, nachdem sie durch alle Spreizrippen 20 hindurchgeschraubt worden ist, zwischen die Spreizzungen 26 und spreizt diese auseinander, wodurch die Verankerungskraft des Spreizdübels 10 zusätzlich erhöht wird. Die Spreizschraube kann das Filmscharnier 28 durchdringen und auftrennen, was die Verankerung des Spreizdübels 10 im Bohrloch nicht verschlechtert.

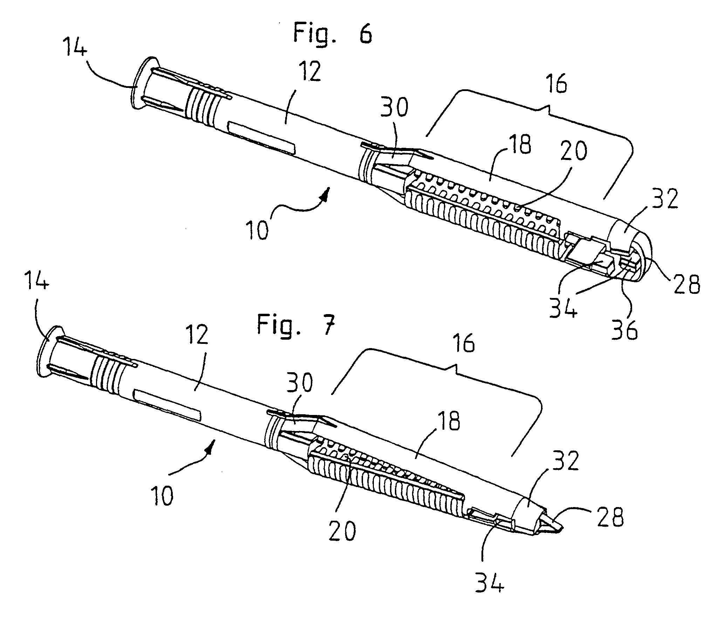

Figur 6 zeigt eine zweite Ausgestaltung eines erfindungsgemäßen Spreizdübels 10. Dieser weist ebenso wie der in den Figuren 1 bis 5 dargestellte Spreizdübel 10 eine Schafthülse 12 mit einem trichterförmigen Bund 14 auf. Ebenso weist der in Figur 6 dargestellte Spreizdübel 10 zwei in Längsrichtung verlaufende Umfangswandabschnitte 18 auf, an deren Innenseiten Spreizrippen 20 in Radialebenen zum Spreizdübel 10 angeordnet sind. Der in Figur 6 dargestellte Spreizdübel 10 ist insoweit identisch aufgebaut und funktioniert in gleicher Weise wie der in Figuren 1 bis 5 dargestellte und vorstehend erläuterte Spreizdübel 10. Zur Vermeidung von Wiederholungen wird insoweit auf die vorhergehenden Erläuterungen des Spreizdübels 10 verwiesen, für gleiche Bauteile werden gleiche Bezugszeichen verwendet. Nachfolgend werden die Unterschiede des in Figur 6 dargestellten Spreizdübels 10 zu dem bereits beschriebenen, in Figuren 1 bis 5 dargestellten Spreizdübel 10 erläutert.

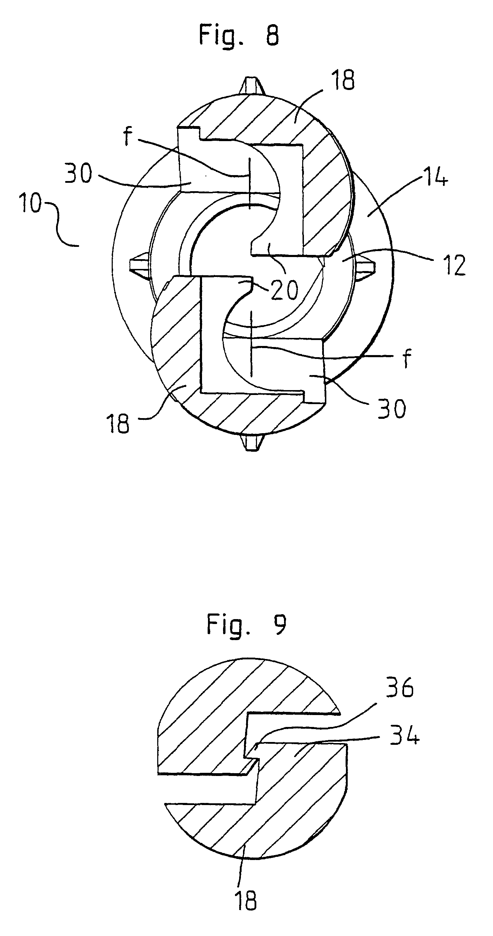

Figur 6 zeigt den Spreizdübel 10 in einem Zustand nach dem Spritzgießen. Die in Längsrichtung des Spreizdübels 10 verlaufenden Umfangswandabschnitte 18 sind parallel zueinander und mit einem solchen Abstand voneinander angeordnet, daß die an ihren Innenseiten angeordneten Spreizrippen 20 nicht ineinander greifen. Im Spreizbereich 16 besteht ein in Längsrichtung des Spreizdübels 10 ununterbrochenen, quer durch den Spreizdübel 10 durchgehender Zwischenraum zwischen den Spreizrippen 20, der ein Entformen des einstückig durch Spritzgießen hergestellten Spreizdübels 10 ermöglicht. Figur 8 zeigt einen Querschnitt (im Spreizbereich 16) des Spreizdübels 10 in dem in Figur 6 dargestellten Zustand des Spreizdübels 10 nach dem Spritzgießen. In Figur 8 ist der Zwischenraum zwischen den Spreizrippen 20, der das Entformen des Spreizdübel 10 nach dem Spritzgießen ermöglicht, erkennbar.

Die beiden Umfangswandabschnitte 18 sind in Querrichtung des Spreizdübels 10 zusammendrückbar am Spreizdübel 10 angebracht, wie in Figur 8 mit den Pfeilen f angedeutet. Um die Umfangswandabschnitte 18 zusammendrücken zu können, sind diese an ihren der Schafthülse 12 zugewandten Enden über stegartige Verbindungselemente 30 einstückig mit der Schafthülse 12 verbunden. Die Verbindungselemente 30 stehen von der Schafthülse 12 schräg zum vorderen Dübelende hin nach außen und sind am Übergang zur Schafthülse 12 und zu den Umfangswandabschnitten 18 scharnierartig verformbar. An ihren der Schafthülse 12 abgewandten Enden sind die Umfangswandabschnitte 18 über ein Filmscharnier 28 zusammendrückbar miteinander verbunden. Durch das Zusammendrücken der Umfangswandabschnitte 18 in Richtung der Pfeile f in Figur 8 gelangen die Spreizrippen 20 kammartig ineinandergreifend zwischeneinander wie in Figur 5 dargestellt. Nach dem Zusammendrücken der Umfangswandabschnitte 18 ist der in Figur 6 dargestellte Spreizdübel 10 ebenso verwendbar wie der in Figuren 1 bis 5 dargestellte Spreizdübel 10. Das Zusammendrücken der Umfangswandabschnitte 18 kann nach dem Entformen des Spreizdübels 10 und vor dem Einbringen des Spreizdübels 10 in ein Bohrloch oder auch durch Einbringen des Spreizdübels 10 in ein Bohrloch erfolgen.

Die Umfangswandabschnitte 18 weisen an ihrem vorderen, der Schafthülse 12 abgewandten Ende eine kegelstumpfförmige Verjüngung 32 auf, die ggf. in Zusammenwirken mit dem bogen- oder pfeilförmigen Filmscharnier 28 das Zusammendrücken der Umfangswandabschnitte 18 beim Einbringen des Spreizdübel 10 in ein Bohrloch bewirkt. Gegenüber dem in Figuren 1 bis 5 dargestellten Spreizdübel 10 ist das Verbringen des in Figur 6 dargestellten Spreizdübels 10 in den verwendungsfähigen Zustand vereinfacht, da die Umfangswandabschnitte 18 nicht zusammengeklappt, sondern nur zusammengedrückt werden müssen, was insbesondere bei der automatisierten Fertigung einfacher ist. Desweiteren entfällt das Verbinden eines Umfangswandabschnittes 18 mit der Schafthülse 12, da bei dem in Figur 6 dargestellten Spreizdübel 10 beide Umfangswandabschnitte 18 über die Verbindungselemente 30 mit der Schafthülse 12 verbunden sind.

Um die Umfangswandabschnitte 18 nach dem Zusammendrücken zusammen und die Spreizrippen 20 kammartig ineinandergreifend zu halten weist der in Figur 6 dargestellte Spreizdübel 10 Rastelemente 34 auf. Die Rastelemente 34 sind deutlich im Querschnitt gemäß Figur 9 zu sehen. In Figur 9 sind lediglich die Querschnittsflächen dargestellt und hinter der Schnittebene an sich sichtbare Elemente des Spreizdübels 10 wie die Spreizrippen 20, die Umfangswandabschnitte 18 und die Schafthülse 12 der klaren Darstellung wegen weggelassen. Die Rastelemente 34 sind als mit den Umfangswandabschnitten 18 einstückige Blöcke ausgebildet, die seitlich einer gedachten Mittellängsebene des Spreizdübels 10 angeordnet sind. Von den Rastelementen 34 stehen Rastnasen 36 zur Seite ab, die beim Zusammendrücken der Umfangswandabschnitte 18 miteinander verrasten und die Umfangswandabschnitte 18 zusammenhalten. Die Rastelemente 34 hindern das Aufspreizen des Spreizdübels 10 nicht, da sich die Umfangswandabschnitte 18 beim Eindrehen einer Spreizschraube verformen und zudem die Spreizschraube die Rastelemente 34 problemlos außer Eingriff bringt.

Die Rastelemente 34 sind im dargestellten Ausführungsbeispiel der Erfindung lediglich am vorderen Ende der Umfangswandabschnitte 18 vorgesehen, wobei zwei Paare Rastelemente 34 in Längsrichtung des Spreizdübels 10 hintereinander und einander entgegengesetzt angeordnet sind. Die Rastelemente 34 halten die Umfangswandabschnitte am vorderen Ende des Spreizdübels 10 zusammen, so daß die Umfangswandabschnitte 18 nur am vorderen Ende des Spreizdübels 10 zusammengehalten werden und eine pfeilartige Stellung schräg zueinander einnehmen, wie in Figur 7 dargestellt. Am Übergang zur Schafthülse 12 haben die Umfangswandabschnitte 18 Abstand voneinander. Der Spreizdübel 10 läßt sich in dem in Figur 7 dargestellten Zustand problemlos in ein Bohrloch einbringen und dort verankern, die Umfangswandabschnitte werden beim Einbringen in das Bohrloch vom Bohrloch zusammengedrückt. Vorteil dieser Ausgestaltung der Erfindung ist, daß der Spreizdübel 10 bis zum Eindrehen der Spreizschraube auch in einem Bohrloch mit Übermaß Halt findet aufgrund der am Übergang zur Schafthülse 12 nach außen stehenden Umfangswandabschnitte 18. Der Spreizdübel 10 fällt dadurch vor dem Aufspreizen bei einer Deckenmontage auch aus einem Bohrloch mit großem Übermaß nicht heraus. Rastelemente 34, wie sie in Figur 9 dargestellt sind, können auch an anderer Stelle des Spreizbereichs 16 und/oder am Übergang zur Schafthülse 12 vorgesehen sein (nicht dargestellt).

## Patentansprüche

1. Spreizdübel aus Kunststoff mit einem sich in Längsrichtung erstreckenden Spreizbereich und mit einem in Längsrichtung verlaufenden Spreizkanal, in den ein stiftförmiges Spreizelement zum Aufspreizen des Spreizdübels einbringbar ist, wobei der Spreizdübel im Spreizbereich kammartig ineinandergreifende, im wesentlichen rechtwinklig zur Längsrichtung des Spreizdübels angeordnete Spreizelemente aufweist, **dadurch gekennzeichnet, daß** die Spreizelemente als Spreizrippen (20) ausgebildet sind, daß Innenränder (22) der Spreizrippen (20) den Spreizkanal (24) im Spreizbereich (16) des Spreizdübels (10) am Umfang begrenzen und verengen, daß die Innenränder (22) der Spreizrippen (20) sich nur über einen Teil des Umfangs des Spreizkanals (24) erstrecken, und daß die Spreizrippen (20) innen an Umfangswandabschnitten (18) des Spreizdübels (10) angebracht sind, wobei sich jeder Umfangswandabschnitt (18) nur über einen Teil des Umfangs des Spreizdübels (10) erstreckt, und wobei alle Umfangswandabschnitte (18) zusammen den Spreizdübel (10) in Umfangsrichtung im wesentlichen schließen.

2. Spreizdübel nach Anspruch 1, **dadurch gekennzeichnet, daß** der Spreizdübel (10) zwei Umfangswandabschnitte (18) aufweist.

3. Spreizdübel nach Anspruch 2, **dadurch gekennzeichnet, daß** sich die Innenränder (22) der Spreizrippen (20) und die Umfangswandabschnitte (18) über einen Winkel von ungefähr 180° in Umfangsrichtung erstrecken.

4. Spreizdübel nach Anspruch 1, **dadurch gekennzeichnet, daß** der Spreizdübel (10) eine in Umfangsrichtung geschlossene Schafthülse (12) aulweist, die mit zumindest einem Umfangswandabschnitt (18) einstückig ist.

5. Spreizdübel nach Anspruch 1, **dadurch gekennzeichnet, daß** die Umfangswandabschnitte (18) über ein Filmscharnier (28) schwenkbar miteinander verbunden sind.

6. Spreizdübel nach Anspruch 1, **dadurch gekennzeichnet, daß** die Umfangswandabschnitte (18) in einem solchen Abstand voneinander angeordnet sind, daß die Spreizrippen (20) nicht oder nur wenig ineinandergreifen, und daß die Umfangswandabschnitte (18) zusammendrückbar sind, so daß die Spreizrippen (20) kammartig ineinander greifen.

7. Spreizdübel nach Anspruch 6, **dadurch gekennzeichnet, daß** der Spreizdübel (10) eine Schafthülse (12) aufweist, mit der die Umfangswandabschnitte (18) über bewegliche Verbindungselemente (30) einstückig und zusammendrückbar verbunden sind.

8. Spreizdübel nach Anspruch 6, **dadurch gekennzeichnet, daß** die Umfangswandabschnitte (18) Schnapp- oder Rastelemente (34, 36) aufweisen, mit denen sie in zusammengedrücktem Zustand miteinander verbunden sind.

9. Spreizdübel nach Anspruch 6, **dadurch gekennzeichnet, daß** die Umfangswandabschnitte (18) über ein Filmscharnier (28) miteinander verbunden sind.

## Claims

1. An expansible fixing plug of plastics material having an expansion region extending in the lengthwise direction and an expansion channel running in the lengthwise direction, into which channel a pin-shaped expansion element can be introduced in order to expand the expansible fixing plug, the expansible fixing plug comprising expansion elements arranged substantially at right angles to the lengthwise direction of the expansible fixing plug and interleaving with one another in the expansion region, **characterised in that** the expansion elements are in the form of expansion ribs (20), inner edges (22) of the expansion ribs (20) define and constrict the expansion channel (24) at the circumference thereof in the expansion region (16) of the expansible fixing plug (10), the inner edges (22) of the expansion ribs (20) extend only over part of the circumference of the expansion channel (24), and the expansion ribs (20) are disposed on the inside of circumferential wall portions (18) of the expansible fixing plug (10), each circumferential wall portion (18) extending only over a part of the circumference of the expansible fixing plug (10), and all circumferential wall portions (18) together substantially closing the expansible fixing plug (10) circumferentially.

2. An expansible fixing plug according to claim 1, **characterised in that** the expansible fixing plug (10) comprises two circumferential wall portions (18).

3. An expansible fixing plug according to claim 2, **characterised in that** the inner edges (22) of the expansion ribs (20) and the circumferential wall portions (18) extend over an angle of about 180° circumferentially.

4. An expansible fixing plug according to claim 1, **characterised in that** the expansible fixing plug (10) comprises a circumferentially closed shank barrel (12), which is in one piece with at least one circumferential wall portion (18).

5. An expansible fixing plug according to claim 1, **characterised in that** the circumferential wall portions (18) are connected to one another so as to articulate by means of a film hinge (28).

6. An expansible fixing plug according to claim 1, **characterised in that** the circumferential wall portions (18) are arranged spaced from one another by a distance such that the expansion ribs (20) do not, or only slightly, mesh with one another, and the circumferential wall portions (18) can be pressed together, so that the expansion ribs (20) interleave.

7. An expansible fixing plug according to claim 6, **characterised in that** the expansible fixing plug (10) comprises a shank barrel (12), with which the circumferential wall portions (18) are joined, in one piece and so that they can be pressed together, by means of movable joining elements (30).

8. An expansible fixing plug according to claim 6, **characterised in that** the circumferential wall portions (18) comprises snap-fit or locking elements (34, 36), with which they are joined to one another in the pressed-together state.

9. An expansible fixing plug according to claim 6, **characterised in that** the circumferential wall portions (18) are joined to one another by means of a film hinge (28).

## Revendications

1. Cheville à expansion en matière plastique, avec une région d'expansion s'étendant en direction longitudinale et avec un canal d'expansion s'étendant en direction longitudinale et dans lequel peut être introduit un élément d'expansion en forme de tige pour réaliser l'expansion de la cheville, la cheville à expansion présentant dans la région d'expansion des éléments expansibles disposés sensiblement à angle droit de la direction longitudinale de la cheville, qui s'engagent les uns dans les autres à la manière, d'un peigne, **caractérisée en ce que** les éléments expansibles sont réalisés sous forme de nervures expansibles (20), **en ce que** des bords intérieurs (22) des nervures expansibles (20) délimitent circonférentiellement et rétrécissent le canal d'expansion (24) dans la région d'expansion (16) de la cheville à expansion (10), **en ce que** les bords intérieurs (22) des nervures expansibles (20) ne s'étendent que sur une partie de la circonférence du canal d'expansion (24), et **en ce que** les nervures expansibles (20) sont placées intérieurement sur des parties (18) de paroi circonférentielle de la cheville à expansion (10), chaque partie (18) de paroi circonférentielle ne s'étendant que sur une partie de la circonférence de la cheville à expansion (10), et les parties (18) de paroi circonférentielle fermant ensemble pour l'essentiel la cheville à expansion (10) en direction circonférentielle.

2. Cheville à expansion selon la revendication 1, **caractérisée en ce que** la cheville à expansion (10) présente deux parties (18) de paroi circonférentielle.

3. Cheville à expansion selon la revendication 2, **caractérisée en ce que** les bords intérieurs (22) des nervures expansibles (20) et les parties (18) de paroi circonférentielle s'étendent sur un angle d'environ 180° en direction circonférentielle.

4. Cheville à expansion selon la revendication 1, **caractérisée en ce que** la cheville à expansion (10) présente un manchon formant corps (12) fermé en direction circonférentielle, qui est solidaire d'au moins une partie (18) de paroi circonférentielle.

5. Cheville à expansion selon la revendication 1, **caractérisée en ce que** les parties (18) de paroi circonférentielle sont mutuellement reliées à pivotement au moyen d'une charnière pelliculaire (28).

6. Cheville à expansion selon la revendication 1, **caractérisée en ce que** les parties (18) de paroi circonférentielle sont disposées à une distance mutuelle telle que les nervures expansibles (20) ne s'engagent pas ou peu les unes dans les autres, et **en ce que** les parties (18) de paroi circonférentielle peuvent être comprimées de façon que les nervures expansibles (20) s'engagent les unes dans les autres à la manière d'un peigne.

7. Cheville à expansion selon la revendication 6, **caractérisée en ce que** la cheville à expansion (10) présente un manchon formant corps (12) auquel les parties (18) de paroi circonférentielle sont reliées, solidairement et avec possibilité de compression, par l'intermédiaire d'éléments de liaison (30) pouvant être déplacés.

8. Cheville à expansion selon la revendication 6, **caractérisée en ce que** les parties (18) de paroi circonférentielle présentent des éléments (34, 36) d'encliquetage ou de crantage par lesquels elles sont mutuellement assemblées à l'état comprimé.

9. Cheville à expansion selon la revendication 6, **caractérisée en ce que** les parties (18) de paroi circonférentielle sont mutuellement reliées au moyen d'une charnière pelliculaire (28).
